Europäisches Patentamt

European Patent Office

Office européen des brevets

(11) Veröffentlichungsnummer: **0 643 104 A2**

## (12) EUROPÄISCHE PATENTANMELDUNG

(21) Anmeldenummer: **94113693.9**

(22) Anmeldetag: **01.09.94**

(51) Int. Cl.⁶: **C08L 67/02**, //(C08L67/02, 51:00,51:00,25:12)

(30) Priorität: **09.09.93 DE 4330490**

(43) Veröffentlichungstag der Anmeldung:
**15.03.95 Patentblatt 95/11**

(84) Benannte Vertragsstaaten:
**BE DE ES FR GB IT NL**

(71) Anmelder: **BASF Aktiengesellschaft**
**Carl-Bosch-Strasse 38**
**D-67063 Ludwigshafen (DE)**

(72) Erfinder: **Bright, Theresa Anne, Dr.**
**Stephanienufer 19**
**D-68163 Mannheim (DE)**
Erfinder: **Niessner, Norbert, Dr.**
**Buhl'scher Hof 10**
**D-67159 Friedelsheim (DE)**

(54) **Thermoplastische Formmassen.**

(57) Thermoplastische Formmassen, enthaltend als wesentliche Komponenten

A) 45 bis 85 Gew.-% eines thermoplastischen Polyesters aus Terephthalsäure oder einem überwiegenden Anteil an Terephthalsäure und einem Diol,

B) 5 bis 30 Gew.-% eines Pfropfcopolymerisates mit einem mittleren Teilchendurchmesser von 50 bis 200 nm, aufgebaut aus

   b1) 50 bis 90 Gew.-% eines Pfropfkerns aus

      b1.1) 75 bis 99,9 Gew.-% eines ($C_2$- bis $C_{10}$-Alkyl)acrylats

      b1.2) 0,1 bis 5 Gew.-% eines Monomeren mit mindestens zwei olefinischen nicht konjugierten Doppelbindungen und

      b1.3) bis zu 24,9 Gew.-% weiterer copolymerisierbarer Monomeren

   und

   b2) 10 bis 50 Gew.-% einer Pfropfschale aus

      b2.1) 50 bis 90 Gew.-% Styrol oder eines polymerisierbaren Styrolderivates und

      b2.2) 10 bis 50 Gew.-% Acrylnitril oder Methacrylnitril,

C) 5 bis 30 Gew.-% eines Pfropfcopolymerisates mit einem mittleren Teilchendurchmesser von 250 bis 1000 nm, aufgebaut aus

   c1) 50 bis 90 Gew.-% eines Pfropfkerns aus

      c1.1) 75 bis 99,9 Gew.-% eines ($C_2$- bis $C_{10}$-Alkyl)acrylats

      c1.2) 0,1 bis 5 Gew.-% eines Monomeren mit mindestens zwei olefinischen nicht konjugierten Doppelbindungen

      c1.3) bis 24,9 Gew.-% weiterer copolymerisierbarer Monomeren und

   c2) 10 bis 50 Gew.-% einer Pfropfschale aus

      c2.1) 50 bis 90 Gew.-% Styrol oder eines polymerisierbaren Styrolderivates und

      c2.2) 10 bis 50 Gew.-% Acrylnitril oder Methacrylnitril,

und

D) 5 bis 25 Gew.-% eines Copolymerisates aus

   d1) 50 bis 90 Gew.-% Styrol oder eines polymerisierbaren Styrolderivates und

   d2) 10 bis 50 Gew.-% Acrylnitril oder Methacrylnitril

Die Erfindung betrifft thermoplastische Formmassen, enthaltend als wesentliche Komponenten

A) 45 bis 85 Gew.-% eines thermoplastischen Polyesters aus Terephthalsäure oder einem überwiegendem Anteil an Terephthalsäure und einem Diol,

B) 5 bis 30 Gew.-% eines Pfropfcopolymerisates mit einem mittleren Teilchendurchmesser von 50 bis 200 nm, aufgebaut aus

b1) 50 bis 90 Gew.-% eines Pfropfkerns aus

b1.1) 75 bis 99,9 Gew.-% eines ($C_2$- bis $C_{10}$-Alkyl)acrylats

b1.2) 0,1 bis 5 Gew.-% eines Monomeren mit mindestens zwei olefinischen nicht konjugierten Doppelbindungen und

b1.3) bis zu 24,9 Gew.-% weiterer copolymerisierbarer Monomeren

und

b2) 10 bis 50 Gew.-% einer Pfropfschale aus

b2.1) 50 bis 90 Gew.-% Styrol oder eines polymerisierbaren Styrolderivates und

b2.2) 10 bis 50 Gew.-% Acrylnitril oder Methacrylnitril,

C) 5 bis 30 Gew.-% eines Pfropfcopolymerisates mit einem mittleren Teilchendurchmesser von 250 bis 1000 nm, aufgebaut aus

c1) 50 bis 90 Gew.-% eines Pfropfkerns aus

c1.1) 75 bis 99,9 Gew.-% eines ($C_2$- bis $C_{10}$-Alkyl)acrylats

c1.2) 0,1 bis 5 Gew.-% eines Monomeren mit mindestens zwei olefinischen nicht konjugierten Doppelbindungen

c1.3) bis 24,9 Gew.-% weiterer copolymerisierbarer Monomeren und

c2) 10 bis 50 Gew.-% einer Pfropfschale aus

c2.1) 50 bis 90 Gew.-% Styrol oder eines polymerisierbaren Styrolderivates und

c2.2) 10 bis 50 Gew.-% Acrylnitril oder Methacrylnitril,

und

D) 5 bis 25 Gew.-% eines Copolymerisates aus

d1) 50 bis 90 Gew.-% Styrol oder eines polymerisierbaren Styrolderivates und

d2) 10 bis 50 Gew.-% Acrylnitril oder Methacrylnitril.

Außerdem betrifft die Erfindung die Verwendung derartiger Formmassen zur Herstellung von Formkörpern und Formkörper, die aus den erfindungsgemäßen Formmassen als wesentlichen Komponenten erhältlich sind.

In der DE-A 2 758 497 werden thermoplastische Formmassen auf der Basis von Mischungen aus Polyalkylenterephthalaten und kautschukelastischen Copolymerisaten, sogenannten ASA-Polymerisaten, aus verschiedenen Acrylsäureestern und α-Methylstyrol, die mit Styrol-Acrylnitril-Copolymerisaten gepfropft sind, beschrieben. Diese Formmassen sind zur Herstellung von Formkörpern wie vor allem Folien und Gehäusen von elektrischen Geräten geeignet. Die mechanischen Eigenschaften sind jedoch insgesamt noch nicht voll zufriedenstellend, insbesondere im Hinblick auf die Zähigkeit.

Aus der EP-A 6 503 sind Mischungen bekannt, die aus ASA-Polymerisaten mit einer bimodalen Teilchengrößenverteilung und aus Copolymerisaten von Styrol und/oder α-Methylstyrol mit Acrylnitril bestehen. Diese Formmassen lassen sich besser einfärben als Formmassen mit einer statistischen Teilchengrößenverteilung und weisen bessere mechanische Eigenschaften auf.

Eine wichtige Gebrauchseigenschaft der aus thermoplastischen Massen hergestellten Kunststoffteile, z.B. Gerätegehäusen, ist ihre Widerstandsfähigkeit gegenüber mechanischen Beanspruchungen wie Stoß oder Schlag. Hierfür ist die multiaxiale Zähigkeit der Kunststoffe von besonderer Bedeutung. Sie wird durch Messung derjenigen Energie ermittelt, die benötigt wird, einen scheibenförmigen Kunststoffprüfkörper senkrecht zu durchstoßen.

Der vorliegenden Erfindung lag die Aufgabe zugrunde, thermoplastische Formmassen auf der Basis von Polyestern und Pfropfpolymerisaten, insbesondere ASA-Polymerisaten, zur Verfügung zu stellen, die eine verbesserte Zähigkeit aufweisen. Insbesondere sollte die multiaxiale Zähigkeit verbessert werden, ohne daß die sonstigen mechanischen und anwendungstechnischen Eigenschaften dieser Formmassen beeinträchtigt werden.

Demgemäß wurden die eingangs definierten thermoplastischen Formmassen gefunden.

Die erfindungsgemäßen Formmassen enthalten

A) 45 bis 85, vorzugsweise 50 bis 76 und insbesondere 60 bis 70 Gew.-% eines thermoplastischen Polyesters (A) aus Terephthalsäure oder Dicarbonsäuren mit einem überwiegende Anteil Terephthalsäure und einem Diol

B) 5 bis 30, vorzugsweise 8 bis 25 und insbesondere 10 bis 20 Gew.-% eines feinteiligen Pfropfcopolymerisates (B),

2

C) 5 bis 30, vorzugsweise 8 bis 25 und insbesondere 10 bis 20 Gew.-% eines grobteiligen Pfropfcopolymerisates (C) und

D) 5 bis 25, vorzugsweise 8 bis 20 und insbesondere 10 bis 15 Gew.-% eines Copolymerisates (D) aus Styrol oder Styrolderivaten mit Acrylnitril oder Methacrylnitril.

Polyester (A)

Man erhält die thermoplastischen Polyester (A) in an sich bekannter Weise durch Polykondensation einer Dicarbonsäure oder eines funktionellen Derivates der Dicarbonsäure mit einem Diol. Als funktionelle Derivate der Dicarbonsäuren kommen vor allem die Dimethylester in Betracht.

Bevorzugt wird als Dicarbonsäure nur Terephthalsäure verwendet. Bis zu 50, vorzugsweise bis zu 20 mol-% der Terephthalsäure können jedoch durch weitere Dicarbonsäuren wie die Naphthalindicarbonsäuren, Isophthalsäure, Phthalsäure, Adipinsäure, Azelainsäure, Sebacinsäure, Dodecandisäuren und die Cyclohexandicarbonsäuren sowie Mischungen dieser Carbonsäuren ersetzt werden.

Als Diole kommen in erster Linie Butan-1,4-diol oder Ethylenglycol in Betracht, daneben aber auch sonstige Diole wie 1,6-Hexandiol, Neopentylglycol, Cyclohexan-1,4-diol, 1,4-Bis(hydroxymethyl)cyclohexan sowie Buten-1,4-diol und 4,4'-Dihydroxy-diphenyl-methan, sowie Mischungen aus 1 bis 20 mol-% dieser Diole und dem Rest an Butan-1,4-diol oder Ethylenglycol.

Die Viskositätszahl der Polyester (A), gemessen an einer 0,5 gew.%igen Lösung in einem Phenol/o-Dichlorbenzolgemisch (Gewichtsverhältnis 1:1) bei 25°C, liegt vorzugsweise im Bereich von 50 bis 250 $cm^3$/g, vorzugsweise von 70 bis 170 $cm^3$/g. Dies entspricht einer Molmasse von ungefähr 10 000 bis 30.000.

Pfropfcopolymerisate (B) und (C)

Der Aufbau und die Herstellung sowohl der grobteiligen als auch der feinteiligen Pfropfcopolymerisate (B) und (C) sowie deren Mischungen sind an sich bekannt (vgl. z.B. EP-A 6 503).

Es ist erfindungswesentlich, daß die Pfropfcopolymerisate (B) und (C) verschiedene mittlere Teilchendurchmesser aufweisen und die Teilchendurchmesserverteilungen sich nicht wesentlich überlappen.

Das feinteilige Pfropfcopoylmerisat (B) hat einen mittleren Teilchendurchmesser (abgekürzt: $d_{50}$) von 50 bis 200, bevorzugt von 80 bis 150 nm.

Der mittlere Teilchendurchmesser ($d_{50}$) des grobteiligen Pfropfcopolymerisates (C) liegt bei 250 bis 1000, bevorzugt bei 350 bis 800 nm.

Hierbei ist $d_{50}$ als der Teilchendurchmesser definiert, bei dem der Anteil der Teilchen mit einem Teilchendurchmesser unter $d_{50}$ weniger als 50 Gew.-% ausmacht. Diesen Teilchendurchmesser kann man mittels einer analytischen Ultrazentrifuge nach der Methode von W. Scholtan und H. Lange, Kolloid-Z., und Z.-Polymerisate 250 (1972) Seiten 782 bis 796, bestimmen.

Es ist vorteilhaft, wenn die Teilchengrößenverteilung des jeweiligen fein- und grobteiligen Anteils eng ist, was beim grobteiligen Anteil von besonderer Bedeutung ist.

Die Teilchengrößenverteilung läßt sich durch den Quotienten

$$Q = (d_{90} - d_{10}) / d_{50}$$

ausdrücken. Die Teilchendurchmesser $d_{90}$ und $d_{10}$ sind dabei entsprechend $d_{50}$ definiert, mit dem Unterschied, daß sie auf 10 bzw. 90 Gew.-% der Teilchen bezogen sind.

Für den Quotienten Q sind im Fall der feinteiligen Pfropfcopolymerisate (B) Werte unter 0,3, besonders von unter 0,2 und im Fall der grobteiligen Pfropfcopolymerisate (C) Werte von unter 0,5, besonders von unter 0,35 bevorzugt.

Für die Pfropfcopolymerisate (B) und (C) kommen dieselben Monomeren und Bereiche für die Bruttozusammensetzung in Frage. Beide bestehen zu

50 bis 90, vorzugsweise 50 bis 70 % aus einem Pfropfkern (b1) bzw. (c1), einem kautschukelastischen Polymerisat auf Basis eines ($C_2$- bis $C_{10}$-Alkyl)acrylats und

10 bis 50, vorzugsweise 30 bis 50 % aus einer Pfropfschale (b2) bzw. (c2), einem Copolymerisat von Styrol oder einem Styrolderivat Acrylnitril oder Methacrylnitril.

Für die kautschukelastischen Pfropfkerne (b1) bzw. (c1) sind vorzugsweise Polymerisate geeignet, deren Glasübergangstemperaturen $T_G$ unterhalb von 10°C, vorzugsweise unterhalb von 0°C liegen. Es werden vor allem solche Monomeren copolymerisiert, deren Homopolymerisate die bevorzugten Glasübergangstemperaturen $T_G$ aufweisen, daneben können jedoch auch in untergeordneten Mengen Monomeren,

3

deren Homopolymerisate eine höhere Glastemperatur aufweisen, eingesetzt werden.

Die Pfropfkerne (b1) bzw. (c1) sind aufgebaut aus

75 bis 99,9 Gew.-%, vorzugsweise 90 bis 99 Gew.-% eines ($C_2$- bis $C_{10}$-Alkyl)acrylats (Monomeren b1.1 bzw. c1.1)

0,1 bis 5 Gew.-% vorzugsweise 1 bis 4 Gew.-% eines Monomeren mit mindestens zwei olefinischen nicht konjugierten Doppelbindungen (Monomeren b1.2 bzw. c1.2) und

bis 24,9 Gew.-%, vorzugsweise 10 bis 20 Gew.-% weiterer copolymerisierbarer Monomeren (Monomeren b1.3 bzw. c1.3).

Bevorzugte Monomeren (b1.1) bzw. (c1.1) sind Alkylacrylate mit 2 bis 8 C-Atomen im Alkylrest. Besonders bevorzugt wird n-Butylacrylat und/oder 2-Ethyl-hexylacrylat und ganz besonders bevorzugt nur n-Butylacrylat verwendet.

Geeignete Monomeren (b1.2) bzw. c1.2) sind beispielsweise Divinylbenzol, Divinylmaleat, Diallylfumarat, Diallylphthalat, Triallylcyanurat und Triallylisocyanat und insbesondere das Acrylat des Tricyclodecenylalkohols (vgl. DE-A 1 260 135).

Weitere copolymerisierbare Monomeren (b1.3) bzw. (c1.3) sind Isopren, Styrol, polymerisierbare Styrolderivate, z.B. $\alpha$-Methylstyrol, Acrylnitril, ($C_1$- bis $C_8$-Alkyl)methacrylate wie Methylmethacrylat, Methylacrylat, Vinylmethylether sowie Mischungen dieser Monomeren.

Die Pfropfschalen (b2) bzw. (c2) sind aufgebaut aus

50 bis 90 Gew.-%, bevorzugt 60 bis 80 Gew.-%, Styrol oder einem polymerisierbaren Styrolderivat (Monomeren b2.1 bzw. c2.1) und

10 bis 50 Gew.-% vorzugsweise 20 bis 40 Gew.% Acrylnitril oder Methacrylnitril (Monomeren b2.2 bzw. c2.2).

Im allgemeinen empfiehlt es sich, die Pfropfcopolymerisate (B) und (C) getrennt herzustellen und anschließend in den definitionsgemäßen Verhältnissen zu mischen.

In zweiter Linie kommen solche bimodalen Mischungen von Pfropfcopolymerisaten (B) und (C) in Betracht, bei denen man das Polymerisat (C) durch Agglomeration des Polymerisates (B) erhält.

Die Herstellung der Pfropfcopolymerisate (B) und (C) kann beispielsweise nach der in der EP-A 6 503 beschriebenen Methode erfolgen.

Hierzu stellt man nach dem Verfahren der Emulsionspolymerisation zunächst einen Pfropfkern (b1) bzw. (c1) her, auf den nach dem selben Verfahren eine Pfropfschale (b2) bzw. (c2) aufgepfropft wird.

Einen Pfropfkern (b1) erhält man durch Copolymerisation der Acrylsäureester (b1.1) und eines mehrfunktionellen, die Vernetzung bewirkenden Monomeren (b1.2), gegebenenfalls zusammen mit weiteren Comonomeren (b1.3), in wässeriger Emulsion. Es werden zweckmäßigerweise die üblichen Hilfsstoffe wie Emulgatoren, Polymerisationsinitiatoren und Regler mitverwendet. Auf bekannte Weise kann durch Wahl der Polymerisationsbedingungen, insbesondere Art, Menge und Dosierung des Emulgators der mittlere Teilchendurchmesser der Pfropfkern-Dispersion eingestellt werden.

Es empfiehlt sich, bei der Herstellung des grobteiligen Pfropfcopolymerisat (C) von einer entsprechend grobteiligen Dispersion des Pfropfkerns (c1) auszugehen. Diese kann grundsätzlich nach den bekannten einstufigen Methoden zur Herstellung von grobteiligen Dispersionen hergestellt werden.

Für die Herstellung von Pfropfcopolymerisaten (C) mit enger Teilchengrößenverteilung ist im allgemeinen die sogenannte Saatlatex-Methode besonders gut geeignet. Hierbei legt man eine auf die bereits beschriebene Weise hergestellte feinteilige Dispersion des Pfropfkerns (b1) als ein Saatlatex vor, der durch Zugabe von weiteren Monomeren weiter wächst. Die Polymerisationsbedingungen lassen sich dabei so einstellen, daß vorwiegend nur die vorhandenen Polymerisatpartikel des Saatlatex weiter wachsen, ohne daß neue Latexteilchen gebildet werden (vgl. DE-B 1 911 882).

Zur Pfropfung der Pfropfschalen (b2) bzw. (c2) auf die entsprechenden Pfropfkerne polymerisiert man in Gegenwart der zuvor hergestellten Dispersionen der Copolymerisate (b1) bzw. (c1) ein Monomerengemisch aus den Monomeren (b2.1) und (b2.2) bzw. (c2.1) und (c2.2) nach dem Verfahren der Emulsionspolymerisation in üblicher Weise. Da die gewünschte Pfropfausbeute fast immer geringer als 100% ist, muß eine etwas größere Menge des Monomerengemisches zugegeben werden, als es der gewünschten Menge an gepfropftem Polymerisat (b2) bzw. (c2) entspricht. Das nicht gepfropfte, aus diesem Monomerengemisch gebildete Copolymerisat zählt zu dem Copolymerisat (D).

Während die Pfropfschalen der feinteiligen Copolymerisate (B) bevorzugt einstufig aufgebaut werden, werden die der grobteiligen Copolymerisate (C) bevorzugt in mehreren aufeinanderfolgenden Schritten polymerisiert. Die Pfropfschale kann auf diese Weise nach der Art eines Blockcopolymerisates aufgebaut werden.

Hierbei werden die für die Pfropfschale einer gewünschten Bruttozusammensetzung ausgewählten Monomeren auf mehrere Zuläufe mit verschiedener Monomerenzusammensetzung aufgeteilt, die in zeitli-

4

cher Abfolge mit der Pfropfkern-Dispersion in einer Pfropfcopolymerisation umgesetzt werden. Der Zeitraum zwischen den jeweiligen Zuläufen ist so zu bemessen, daß die Pfropfpolymerisation der zuvor zugegebenen Monomeren schon bis zu einem gewissen Umsatz fortgeschritten ist.

Im Falle eines zweischaligen Aufbaus der Pfropfschale (c2) beträgt der Anteil der ersten Schale im allgemeinen 20 bis 70 Gew.-%, insbesondere 25 bis 50 Gew.-%, jeweils bezogen auf die gesamte Pfropfschale (c2). Bei der ersten Pfropfungsstufe werden vorzugsweise nur Monomeren (c2.1), bei der Polymerisation der zweiten Stufe werden vorwiegend Mischungen aus den genannten Styrolmonomeren (c2.1) und Monomeren (c2.2) im Gewichtsverhältnis von (c2.1) : (c2.2) von im allgemeinen 90:10 bis 60:10, insbesondere 80:20 bis 70:30 verwendet.

Copolymerisate (D)

Die Copolymerisate (D) sind harzartig und thermoplastisch. Besonders bevorzugte Copolymerisate (D) sind solche aus Styrol oder polymerisierbaren Styrolderivaten wie α-Methylstyrol mit Acryl- oder Methacrylnitril. Es können auch mehrere der beschriebenen Copolymerisate gleichzeitig eingesetzt werden.

Solche Copolymerisate entstehen häufig bei der Pfropfpolymerisation zur Herstellung der Komponente (B) bzw. (C) im Pfropfungsschritt als Nebenprodukte, besonders dann, wenn große Mengen von dem Monomeren auf kleine Mengen von dem Pfropfkern (b1) bzw. (c1) gepfropft werden.

Die Copolymerisate (D) sind an sich bekannt und lassen sich auch gezielt durch radikalische Polymerisation, insbesondere durch Emulsions-, Suspensions-, Lösungs,- und Massenpolymerisation herstellen. Sie weisen Viskositätszahlen im Bereich von 40 bis 160 auf, entsprechend mittleren Molekulargewichten $M_w$ - (Gewichtsmittelwert) von 40 000 bis 2 000 000.

In die erfindungsgemäßen Formmassen können bis zu 50, insbesondere 7 bis 45 und besonders bevorzugt 10 bis 40 Gew.-%, Glasfasern, bezogen auf das Gesamtgewicht der glasfaserverstärkten Formmassen, eingearbeitet werden.

Die Glasfasern sind kommerziell erhältlich und haben vorzugsweise einen Durchmesser von 6 bis 20 μm. Nach dem Verkneten mit der erfindungsgemäßen Formmasse haben sie im allgemeinen eine mittlere Länge von 0,1 bis 0,5 mm, vorzugsweise von 0,1 bis 0,4 mm. Besonders bevorzugt sind Glasfasern aus E-Glas, einer Glassorte, die weniger als 0,8% Alkalioxid enthält. Zur Erzielung einer besseren Haftung können die Glasfasern mit Organosilanen, Epoxisilanen oder anderen Polymerisatüberzügen beschichtet sein.

Die erfindungsgemäßen Formmassen können weiterhin übliche Zusatzstoffe und Verarbeitungshilfsmittel enthalten.

Übliche Zusatzstoffe sind beispielsweise Stabilisatoren wie Oxidationsverzögerer, Mittel gegen thermische Zersetzung und Zersetzung durch ultraviolettes Licht, Gleit- und Entformungsmittel, Färbemittel wie Farbstoffe und Pigmente, pulverförmige Füll- und Verstärkungsmittel und Weichmacher.

Die Stabilisatoren können den Mischungen in jedem Stadium der Herstellung zugesetzt werden, vorzugsweise aber zu einem frühen Zeitpunkt, um einer vorzeitigen Zersetzung der Massen entgegenzuwirken.

Als Oxidationsverzögerer und Wärmestabilisatoren für die thermoplastischen Formmassen seien diejenigen, die allgemein Polymerisaten zugesetzt werden, wie Halogenide von Metallen der Gruppe I des Periodensystems, z.B. Natrium-, Kalium-, Lithium-Halogenide in Verbindung mit Kupfer-(I)-Halogeniden, z.B. Chloriden, Bromiden oder Iodiden, genannt. Ferner sind geeignete Stabilisatoren sterisch gehinderte Phenole, Hydrochinone, verschieden substituierte Vertreter dieser Gruppe und Mischungen dieser Mittel in Konzentrationen bis 1 Gew.-%, bezogen auf das Gewicht der Gesamtmischung.

Als UV-Stabilisatoren werden ebenfalls die allgemein bei Polymerisaten wirksamen Stoffe in Mengen bis zu 2,0 Gew.-%, bezogen auf das Gesamtgewicht der Mischung, eingesetzt. Beispiele für UV-Stabilisatoren sind verschiedene substituierte Resorcine, Salicylate, Benzotriazole und Benzophenone.

Geeignete Gleit- und Entformungsmittel werden z.B. in Mengen bis zu 5 Gew.-%, bezogen auf das Gesamtgewicht, in die thermoplastische Masse eingearbeitet. Hierzu zählen u.a. Stearinsäuren, Stearylalkohol, Stearinsäureester und -amide.

Ferner können Farbmittel, z.B. organische Farbstoffe wie Nigrosin, Pigmente, z.B. Titandioxid, Cadmiumsulfid, Cadmiumsilfid-Selenid, Phthalocyanine, Ultramarinblau oder Ruß, zugesetzt werden.

Auch Keimbildungsmittel zur Beschleunigung Polyester-Kristallisation wie Talkum, Calciumfluorid, Natriumphenylphosphinat, Aluminiumoxid oder feinteiliges Polytetrafluorethylen können in Mengen von z.B. bis zu 5 Gew.-%, bezogen auf die thermoplastische Masse, angewandt werden.

Weichmacher, wie Phthalsäuredioctylester, Phthalsäuredibenzylester, Phthalsäurebutylbenzylester, Kohlenwasserstofföle, N-(n-Butyl)benzolsulfonamid, o- und p-Toluolethylsulfonamid werden vorteilhaft in Mengen bis etwa 20 Gew.-%, bezogen auf die Formmasse, zugesetzt.

Weiterhin kann man zur Verbesserung der Oberflächenqualität auch 0,1 bis 10, vorzugsweise 0,2 bis 5 Gew.-%, bezogen auf das Gesamtgewicht der Formmasse, Silikonöl zusetzen. Es eignen sich prinzipiell die kommerziell erhältlichen Typen von Silikonölen, vorzugsweise solche mit Viskositäten im Bereich von 25 000 bis 250 000, vorzugsweise 50 000 bis 200 000 mPa•s (bei 25°C), besonders bevorzugt ein Silikonöl auf Basis von Dimethylsiloxan mit einer Viskosität von etwa 100 000 mPa•s bei 25°C.

Die erfindungsgemäßen thermoplastischen Formmassen können hergestellt werden, indem man die Komponenten (A), (B), (C) und (D) und gegebenenfalls die Glasfasern und die weiteren Hilfs- und Zusatzstoffe in einem Extruder verknetet. Derartige Verfahren sind an sich bekannt und in der Literatur beschrieben. Die Mischtemperaturen im Extruder liegen im allgemeinen im Bereich von 240 bis 300°C.

Die erfindungsgemäßen Formmassen zeichnen sich durch eine hohe Festigkeit bei gleichzeitig guter Dehnbarkeit und Zähigkeit aus. Besonders ist hierbei die multiaxiale Zähigkeit hervorzuheben.

Besonders vorteilhaft lassen sich aus den erfindungsgemäßen Formmassen durch Spritzguß Gerätegehäuse für empfindliche und hochwertige elektronische Geräte sowie reißfeste Folien herstellen.

Beispiele:

Es wurden folgende Mischungskomponenten eingesetzt:

Polyalkylenterephthalate (A)

A/1) Polybutylenterephthalat mit einem Molekulargewicht $M_n$ (Zahlenmittelwert) von 25 000 und einer Viskositätszahl, bestimmt nach DIN 53728, Teil 2, von 130 ml/g (Ultradur B 4500 der BASF)

A/2) Polyethylenterephthalat mit einem Molekulargewicht Mn (Zahlenmittelwert) von 30 000 und einer Viskositätszahl, bestimmt nach DIN 53728, Teil 2, von 73 ml/g (Ultralen SP 3700 S der BASF)

Feinteiliges Pfropfpolymerisat (B)

Feinteiliges Pfropfpolymerisat mit einer mittleren Teilchengröße von 0,1 μm und einer Teilchengrößenverteilung Q = 0,25 aus

b1) einem Pfropfkern aus
b1.1) 58,8 Gew.-% n-Butylacrylat
b1.2) 1,2 Gew.-% Tricyclodecenylacrylat
und
b2) einer Pfropfschale aus
b2.1) 30 Gew.-% Styrol
b2.2) 10 Gew.-% Acrylnitril

Herstellung des feinteiligen Pfropfpolymerisates (B) Pfropfkern (b1)

Zu einer Vorlage aus 16 g Butylacrylat, 0,4 g Tricyclodecenylacrylat, 1 g des Natriumsalzes eines C12- bis C18-Paraffinsulfonsäuregemisches, 0,3 g Kaliumpersulfat, 0,3 g Natriumhydrogencarbonat, 0,15 g Natriumpyrophosphat und 150 ml Wasser wurde nach dem Anspringen der Polymerisationsreaktion eine Mischung aus 82 g Butylacrylat und 1,6 g Tricyclodecenylacrylat über 3 h hinweg gegeben, wobei die Temperatur der Reaktionsmischung 60°C betrug. Im Anschluß an die Monomerenzugabe wurde noch 1 h nachpolymerisiert. Die erhaltene Dispersion hatte einen Feststoffgehalt von 40 Gew.-%, einen mittleren Teilchendurchmesser (d50) von 76 nm und eine Teilchengrößenverteilung von Q = 0,29.

Pfropfschale (b2)

Eine Mischung aus 150 g der Dispersion des Pfropfkerns (b1), 30 g Styrol, 10 g Acrylnitril, 60 g Wasser, 0,03 g Kaliumpersulfat und 0,05 g Lauroylperoxid wurde 4 h bei 65°C polymerisiert. Das Polymerisat wurde anschließend mittels Calciumchloridlösung bei 95°C aus der Dispersion gefällt, mit Wasser gewaschen und getrocknet. Der Pfropfgrad des Pfropfcopolymerisates betrug 35%.

grobteiliges Pfropfpolymerisat (C)

Grobteiliges Pfropfpolymerisat mit einer mittleren Teilchengröße von 0,5 μm und einer Teilchengrößenverteilung Q = 0,20 aus

c1) einem Pfropfkern aus

    c1.1) 58,8 Gew.-% n-Butylacrylat

    c1.2) 1,2 Gew.-% Tricyclodecenylsulfat

und

c2) einer Pfropfschale aus

    c2.1) 33,25 Gew.-% Styrol

    c2.2) 6,75 Gew.-% Acrylnitril

Herstellung des grobteiligen Pfropfcopolymerisates (C)

Zu einer Vorlage aus 1,5 g des Latex von Pfropfkern (b1), 50 g Wasser und 0,1 g Kaliumpersulfat wurde im Verlauf von 3 h synchron eine Mischung aus 49 g Butylacrylat und eine Lösung von 0,5 g des Natriumsalzes einer C12- bis C18-Paraffinsulfonsäure bei 60°C zugegeben. Anschließend wurde 2 h nachpolymerisiert. Der Latex hatte einen Feststoffgehalt von 40%, eine mittlere Teilchengröße (d50) von 430 nm und eine Teilchengrößenverteilung von Q = 0,1.

Pfropfschale (c2)

Eine Mischung aus 150 g des obigen Pfropfkern-Latex (c1), 20 g Styrol, 60 g Wasser, 0,03 g Kaliumpersulfat und 0,05 g Lauroylperoxid wurde 3 h bei 65°C polymerisiert. Anschließend wurde eine Mischung aus 15 g Styrol und 5 g Acrylnitril zugegeben und weitere 4 h polymerisiert. Das Polymerisat wurde anschließend mittels Calciumchloridlösung bei 95°C aus der Dispersion gefällt, mit Wasser gewaschen und getrocknet. Der Pfropfgrad des Pfropfcopolymerisates betrug 35%.

Copolymerisat (D)

Copolymerisat (D) aufgebaut aus

d1) 65 Gew.-% Styrol und

d2) 35 Gew.-% Acrylnitril

mit einer Viskositätszahl von 80 ml/g, gemessen in Dimethylformamid, 0,5%ig bei 25°C.

Die Herstellung erfolgte durch kontinuierliche Lösungspolymerisation nach einem Verfahren, wie es im Kunststoff-Handbuch, Viehweg-Daumiller, Band V (Polystyrol), Carl-Hanser-Verlag, München 1969, S. 124, Zeilen 12ff beschrieben ist.

Außerdem enthielten alle Mischungen noch 0,2 Gew.-% Ruß bezogen auf die Summe der Mischungskomponenten (A), (B), (C) und (D).

Die in der Tabelle beschriebenen Zusammensetzungen wurden aufgeschmolzen und extrudiert. Nach der Extrusion wurden im Spritzguß bei 260°C die für die Bestimmung der Eigenschaften erforderlichen Testkörper hergestellt.

Die Ergebnisse der Prüfungen sind in der Tabelle zusammengestellt.

Die Viskositätszahl (VZ) wurde nach DIN 53726, Teil 2, mit einer 0,5 gew.-%igen Lösung in Phenol/o-Dichlorbenzol (Gewichtsverhältnis 1:1) bei 23°C in einem Ubbelohde-Viskosimeter bestimmt.

Der Melt Flow Index (MFI) dient als Anhaltswert für das Fließverhalten bei Verarbeitungsprozessen mit höherer Schergeschwindigkeit wie Spritzgießen und Extrudieren. Eine aufgeschmolzene Probe wird bei 260°C und einer Belastung von 10 kg durch die Düse des Schmelzindex-Prüfgerätes nach DIN 53 735 gedrückt. Der MFI wird in g/10 min angegeben und entspricht der Masse des Schmelzstranges, der in 10 min aus der Düse herausgedrückt wurde.

Der Zugversuch (Streckspannung und Dehnung) wurde nach DIN 53455 bei 23°C bestimmt mit Probekörpern, die in der DIN-Vorschrift als Probekörper Nr. 3 bezeichnet sind, durchgeführt.

Der E-Modul wurde aus den Ergebnissen der Zugversuche nach DIN 54457-3 errechnet.

Die Kerbschlagzähigkeit wurde nach DIN 53453 bei 23°C bestimmt. Die Schlagarbeit wird ermittelt, indem Normkleinstäbe der Abmessung 50 mm x 6 mm x 4 mm mit einer Lochkerbe von 3 mm Durchmesser in einem Pendelschlagwerk nach Charpy gebrochen wurden.

Die multiaxiale Zähigkeit wurde nach DIN 53443 bei 23°C bestimmt. Kreisförmige Probekörper mit einem Durchmesser von 60mm und einer Dicke von 2 mm werden in einem Spannring von 40 mm Durchmesser eingespannt und mit einem abgerundeten Stahlzylinder senkrecht durchstoßen, wobei die Durchstoßarbeit ermittelt wurde.

Die Wärmeformbeständigkeit nach Vicat wurde nach DIN 53460 bestimmt. Auf einen Probekörper wird eine mit insgesamt 10 N belastete Nadel mit einem Querschnitt von 1 mm aufgesetzt und der Probekörper mit einer Geschwindigkeit von 50 K/h erwärmt. Die Vicat-Temperatur ist erreicht, wenn sich die Nadel 1 mm tief in den Prüfkörper eingedrückt hat.

Tabelle

| | Beispiele | | | | | | |
|---|---|---|---|---|---|---|---|
| | 1 | 2 | 3 | 4V* | 5V* | 6 | 7V* |
| Zusammensetzung | | | | | | | |
| Polybutylenterephthalat (A/1) [%] | 78,6 | 78,6 | 78,6 | 78,6 | 78,6 | 68,1 | 68,1 |
| Polyethylenterephthalat (A/2) [%] | - | - | - | - | - | 10 | 10 |
| grobteiliges Pfropfcopolymerisat (B) [%] | 7,0 | 5,25 | 3,5 | 10,5 | - | 3,5 | - |
| feinteiliges Pfropfcopolymerisat (C) [%] | 3,5 | 5,25 | 7,0 | - | 10,5 | 7,0 | 10,5 |
| Copolymerisat (D) [%] | 10,5 | 10,5 | 10,5 | 10,5 | 10,5 | 10,5 | 10,5 |
| Pentaerythritstearat | 0,4 | 0,4 | 0,4 | 0,4 | 0,4 | 0,8 | 0,8 |
| Talkum | - | - | - | - | - | 0,1 | 0,1 |
| Prüfergebnisse | | | | | | | |
| VZ [ml/g] | 117 | 115 | 117 | 120 | 112 | 121 | 109 |
| UFI [g/10 min] | 110 | 110 | 110 | 110 | 110 | 13 | 4 |
| E-Modul [N/mm²] | 2500 | 2490 | 2510 | 2440 | 2540 | 2510 | 2600 |
| max. Streckspannung [N/mm²] | 53 | 54 | 54 | 45 | 55 | 49 | 52 |
| max. Dehnung [%] | 7 | 11 | 11 | 4 | 5 | 16 | 8 |
| Kerbschlagzähigkeit [kJ/m²] | 3 | 3 | 4 | 3 | 3 | 2 | 1 |
| multiaxiale Zähigkeit [N·m] | 25 | 24 | 55 | 9 | 5 | 63 | 20 |
| Wärmeformbeständigkeit [°C] | 210 | 210 | 210 | 210 | 210 | 210 | 210 |

*)V, zum Vergleich, ohne bimodale Teilchengrößenverteilung

**Patentansprüche**

1. Thermoplastische Formmassen, enthaltend als wesentliche Komponenten

   A) 45 bis 85 Gew.-% eines thermoplastischen Polyesters aus Terephthalsäure oder einem überwiegenden Anteil an Terephthalsäure und einem Diol,

   B) 5 bis 30 Gew.-% eines Pfropfcopolymerisates mit einem mittleren Teilchendurchmesser von 50 bis 200 nm, aufgebaut aus

   b1) 50 bis 90 Gew.-% eines Pfropfkerns aus

   b1.1) 75 bis 99,9 Gew.-% eines ($C_2$- bis $C_{10}$-Alkyl)acrylats

   b1.2) 0,1 bis 5 Gew.-% eines Monomeren mit mindestens zwei olefinischen nicht konjugierten Doppelbindungen und

   b1.3) bis zu 24,9 Gew.-% weiterer copolymerisierbarer Monomeren

   und

   b2) 10 bis 50 Gew.-% einer Pfropfschale aus

   b2.1) 50 bis 90 Gew.-% Styrol oder eines polymerisierbaren Styrolderivates und

   b2.2) 10 bis 50 Gew.-% Acrylnitril oder Methacrylnitril,

   C) 5 bis 30 Gew.-% eines Pfropfcopolymerisates mit einem mittleren Teilchendurchmesser von 250 bis 1000 nm, aufgebaut aus

   c1) 50 bis 90 Gew.-% eines Pfropfkerns aus

   c1.1) 75 bis 99,9 Gew.-% eines ($C_2$- bis $C_{10}$-Alkyl)acrylats

   c1.2) 0,1 bis 5 Gew.-% eines Monomeren mit mindestens zwei olefinischen nicht konjugierten Doppelbindungen

   c1.3) bis 24,9 Gew.-% weiterer copolymerisierbarer Monomeren und

   c2) 10 bis 50 Gew.-% einer Pfropfschale aus

   c2.1) 50 bis 90 Gew.-% Styrol oder eines polymerisierbaren Styrolderivates und

   c2.2) 10 bis 50 Gew.-% Acrylnitril oder Methacrylnitril,

   und

   D) 5 bis 25 Gew.-% eines Copolymerisates aus

   d1) 50 bis 90 Gew.-% Styrol oder eines polymerisierbaren Styrolderivates und

   d2) 10 bis 50 Gew.-% Acrylnitril oder Methacrylnitril

2. Thermoplastische Formmassen nach Anspruch 1, aufgebaut aus n-Butylacrylat und/oder 2-Ethylhexylacrylat als Monomeren (b1.1) und (c1.1).

3. Thermoplastische Formmassen nach dem Anspruch 1 oder 2, aufgebaut aus Monomeren mit zwei olefinischen, nicht konjugierten Doppelbindungen als Monomeren (b1.2) und (c1.2).

4. Thermoplastische Formmassen nach den Ansprüchen 1 bis 3, aufgebaut aus Styrol, Styrolderivaten, Acrylnitril, Methacrylnitril als Monomeren (b1.3) und (c1.3).

5. Thermoplastische Formmassen nach den Ansprüchen 1 bis 4, enthaltend bis zu 50 Gew.-% Glasfasern, bezogen auf das Gesamtgewicht der Mischung.

6. Verwendung der thermoplastischen Formmassen gemäß den Ansprüchen 1 bis 5 zur Herstellung von Formkörpern.

7. Formkörper aus den thermoplastischen Formmassen gemäß den Ansprüchen 1 bis 5.